# FASCICULE DE BREVET EUROPEEN

(11) **EP 4 347 315 B1**
(45) Date de publication et mention de la délivrance du brevet: **28.05.2025**
(21) Numéro de dépôt: 22724470.4
(22) Date de dépôt: 27.04.2022
(51) Int. Cl.: B60R 11/02, H01R 25/14

(54) **SYSTÈME DE FIXATION D'UN DISPOSITIF ALIMENTÉ ÉLECTRIQUEMENT DANS UN HABITACLE DE VÉHICULE AUTOMOBILE**
SYSTEM ZUR BEFESTIGUNG EINES ELEKTRISCH BETRIEBENEN GERÄTS IM INNENRAUM EINES KRAFTFAHRZEUGS
SYSTEM FOR SECURING AN ELECTRICALLY POWERED DEVICE IN A MOTOR VEHICLE INTERIOR

(30) Priorité: 03.06.2021 FR 2105833
(43) Date de publication de la demande: 10.04.2024
(73) Titulaire: Stellantis Auto SAS, 78300 Poissy (FR)
(72) Inventeur: KERVAREC, Florian, 91310 LONGPONT SUR ORGE (FR); DUTOT, Christophe, 78140 VELIZY VILLACOUBLAY (FR); ZIBAT, Aicha, Bernoussi, Casablanca, 20640 (MA); GAUTHIER, Jean Pierre, 94800 VILLEJUIF (FR); MOUGENOT, Jean, 88220 RAON AUX BOIS (FR)
(74) Mandataire: ESIP
(86) Numéro de dépôt international: PCT/FR2022/050795
(87) Numéro de publication internationale: WO 2022/254112

(56) Documents cités:
- WO-A1-2004/055951
- CN-B- 105 599 692
- DE-A1- 102006 045 323
- DE-A1- 19 521 887
- DE-A1- 19 908 087
- JP-A- 2004 123 002
- US-A- 5 180 089

## Description

L'invention se rapporte au domaine des équipements de véhicules automobiles, et concerne plus précisément la fixation sur une planche de bord de véhicule automobile d'éléments divers devant être alimentés électriquement, tels qu'une prise électrique, un chargeur de téléphone, un porte-gobelet réfrigéré, etc.

L'invention part de la constatation qu'il est aujourd'hui nécessaire d'offrir aux occupants d'un véhicule automobile souplesse et facilité dans l'utilisation de différents accessoires nomades ou portables dont ils disposent et qui nécessitent une alimentation électrique.

On connait du document DE102006045323 un système de fixation pour la fixation dans un habitacle de véhicule automobile d'un module adaptateur.

L'invention a ainsi pour but de proposer un système de fixation permettant la fixation d'accessoires et de modules devant être alimentés électriquement.

À cet effet, l'invention concerne un système de fixation pour la fixation dans un habitacle de véhicule automobile d'un module adaptateur, le système de fixation comportant :
- un rail de fixation, de forme allongée, destiné à être fixé à un élément d'habillage d'un véhicule automobile, tel qu'une planche de bord, le rail de fixation comportant une face avant destinée à accueillir un module adaptateur, le rail de fixation comportant deux conducteurs électriques disposés respectivement le long d'une extrémité supérieure et d'une extrémité inférieure du rail de fixation, chaque conducteur étant disposé au fond d'une cavité ménagée dans un rebord correspondant du rail de fixation et ouverte vers l'arrière du rail de fixation ;
- au moins un module adaptateur, le module adaptateur étant configuré pour être fixé au rail de fixation de façon amovible, le module adaptateur comportant un corps et deux contacts mobiles, mobiles par rapport au corps entre une position d'engagement, dans laquelle ils permettent d'accoler le module adaptateur au rail de fixation, les contacts mobiles étant alors disposés de part et d'autre des rebords du rail de fixation, et une position de fixation, dans laquelle une partie avant formant un crochet de chaque contact mobile est en prise avec le rebord correspondant, une extrémité libre de la partie avant de chaque contact mobile comportant une face de contact, la face de contact étant alors reliée électriquement au conducteur correspondant, permettant ainsi de connecter électriquement le corps et le rail de fixation.

Grâce à un rail de fixation intégrable dans un élément d'habillage d'un habitacle de véhicule automobile, le système de fixation conforme à l'invention offre aux occupants du véhicule une grande souplesse pour la fixation d'un ou plusieurs accessoires devant être à la fois fixés et connectés électriquement, tel qu'une prise électrique, un chargeur de dispositif électronique portable, etc. en prévoyant que la fixation au rail de fixation et la connexion électrique s'effectue au moyen des mêmes éléments, à savoir les contacts mobiles, l'invention permet de fixer et connecter électriquement un accessoire de manière simple et rapide. En prévoyant que les conducteurs du rail de fixation soient disposés au sein de cavités ouvertes vers l'arrière, les conducteurs sont difficilement accessibles et sont protégés. Le système conforme à l'invention présente ainsi un niveau de sécurité très élevé.

Dans une réalisation, chaque contact mobile est mobile en translation par rapport au corps selon un premier axe et selon un deuxième axe, les premiers et deuxième axes étant sécants et de préférence perpendiculaires, de telle sorte que les contacts mobiles sont mobiles selon le premier axe entre une position avancée et une position reculée, et sont mobiles selon le deuxième axe entre une position basse et une position haute, la position haute et avancée des contacts mobiles correspondant à la position d'engagement, la position basse et reculée des contacts mobiles correspondant à la position de fixation.

Dans une réalisation, chaque contact mobile est solidaire d'une plaquette respective, chaque plaquette coulissant dans une rainure respective ménagée dans le corps du module adaptateur.

Dans une réalisation, chaque contact mobile est monté à translation sur la plaquette correspondante, chaque plaquette comportant un fût coulissant dans un logement de forme complémentaire ménagé dans le contact mobile correspondant.

Dans une réalisation, le fût de chaque plaquette comporte un dispositif de rappel élastique, tel qu'un ressort, sollicitant le contact mobile vers sa position haute.

Dans une réalisation, chaque contact mobile comporte une partie terminale, la partie terminale étant, dans la position de fixation du contact mobile, logée dans une cavité de forme complémentaire ménagée dans le corps du module adaptateur.

Dans une réalisation, chaque contact mobile comporte un conducteur interne, relié électriquement à la face de contact de la partie avant du contact mobile d'une part, et à une face de contact d'une partie arrière du contact mobile d'autre part.

Dans une réalisation, le conducteur interne de chaque contact mobile est relié électriquement à un conducteur interne respectif du corps lorsque le contact mobile est en position de fixation.

Dans une réalisation, lorsque le module adaptateur forme un socle de prise électrique, chaque conducteur interne du corps est relié électriquement à une borne respective.

Dans une réalisation, le rail de fixation comporte une rainure de positionnement du module adaptateur, le module adaptateur comportant une languette de forme complémentaire de la rainure, la languette étant insérée dans la rainure lorsque le module adaptateur est fixé au rail de fixation.

L'invention concerne également un véhicule automobile comportant un système de fixation conforme à celui défini ci-dessus, le rail de fixation étant fixé dans un élément d'habillage d'habitacle du véhicule, tel qu'une planche de bord, un panneau de porte ou une console, les conducteurs du rail de fixation étant raccordés à un réseau électrique de bord du véhicule.

La présente invention sera mieux comprise à la lecture de la description détaillée qui suit, faite en référence au dessins annexés, dans lesquels :
[Fig. 1] La figure 1 est vue partielle d'un habitacle de véhicule automobile comportant, le véhicule étant équipé d'un système de fixation conforme à l'invention.
[Fig. 2] La figure 2 est une vue en perspective d'un module adaptateur et d'une portion de rail de fixation, le module connectable étant accouplé avec le rail.
[Fig. 3] La figure 3 est une vue en coupe du module adaptateur de la figure 1 avant accouplement avec le rail de fixation.
[Fig. 4] La figure 4 est une vue en coupe du module adaptateur de la figure 1 dans une première phase d'accouplement avec le rail de fixation.
[Fig. 5] La figure 5 est une vue en coupe du module adaptateur de la figure 1 dans une deuxième phase d'accouplement avec le rail de fixation.
[Fig. 6] La figure 6 est une vue en coupe du module adaptateur de la figure 1 après accouplement avec le rail de fixation.
[Fig. 7] La figure 7 est une vue en perspective d'un contact mobile du module adaptateur de la figure 1.
[Fig. 8] La figure 8 est une vue partielle en perspective du module adaptateur de la figure 1 montrant l'agencement des connexions électriques au sein de ce module.

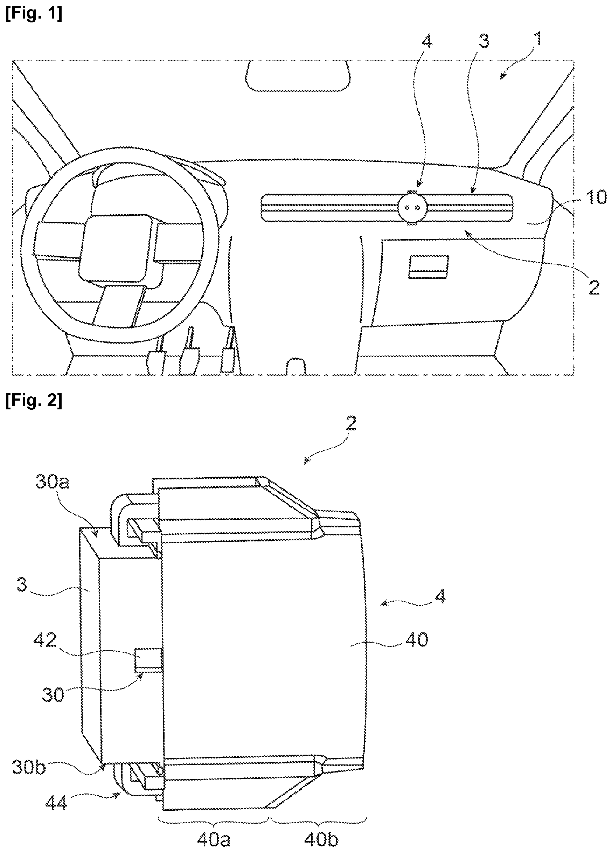

La figure 1 représente partiellement un habitacle d'un véhicule 1 automobile. Le véhicule 1 comporte une planche de bord 10. La planche de bord 10 est équipée d'un système de fixation 2 conforme à l'invention, permettant de fixer simultanément, sur un rail de fixation 3 un ou plusieurs modules adaptateurs 4, tel qu'un module adaptateur formant une prise électrique pour l'alimentation d'un dispositif électronique portable ou nomade, tel qu'un ordinateur portable.

On décrit ci-après, en relation avec les figures 2 à 8, le fonctionnement du système de fixation conforme à l'invention.

La figure 2 est une vue en perspective du module adaptateur 4 de la figure 1 accouplé au rail de fixation 3, dont seule une section est représentée. Le module adaptateur 4 est dans cette configuration à la fois fixé et connecté électriquement au rail de fixation 3 .

Le rail de fixation 3 présente une forme allongée. Il comporte une face arrière destinée à être fixée à un élément d'habillage de véhicule automobile, tel que la planche de bord 10 de la figure 1, et une face avant, destinée à recevoir un ou plusieurs modules adaptateurs tel que le module adaptateur 4 des figures.

Le module adaptateur 4 comporte un corps 40. Le corps 40 comporte une première partie, ou partie de fixation 40a et une deuxième partie, ou partie fonctionnelle 40b, la partie fonctionnelle 40b formant dans l'exemple des figures un socle de prise électrique.

La partie de fixation 40a du corps 40 comporte une languette 42, permettant d'assurer le positionnement du module adaptateur sur le rail de fixation 3, ce dernier comportant sur sa face avant une rainure de positionnement 30 configurée pour recevoir la languette 42.

Lorsque le module adaptateur 4 est fixé au rail de fixation 3, le module adaptateur est retenu par l'intermédiaire de deux contacts mobiles 44 soit un contact mobile inférieur un contact mobile supérieur. Chacun de ces contacts mobiles 44 assure en outre la liaison électrique entre le rail de fixation 3 et le module adaptateur 4. Chaque contact mobile 44 est mobile entre une position d'engagement, permettant l'engagement et le désengagement du module adaptateur avec le rail de fixation 3, et une position de fixation, assurant la fixation du module adaptateur 4 sur le rail de fixation 3, ainsi qu'une connexion électrique entre ces deux éléments.

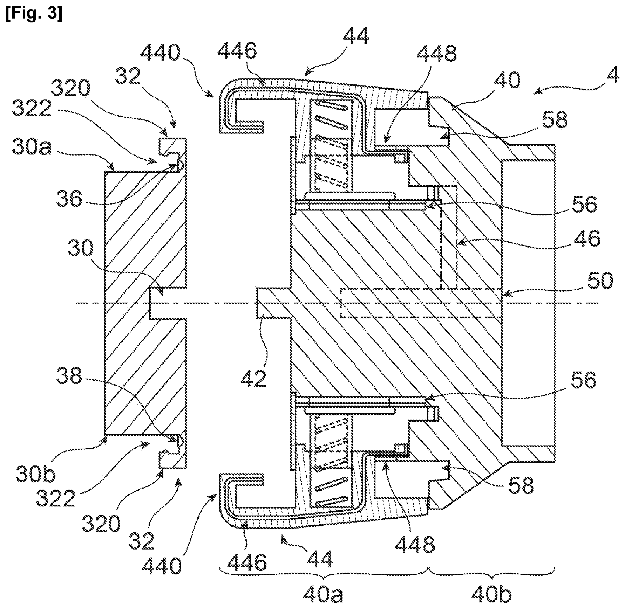

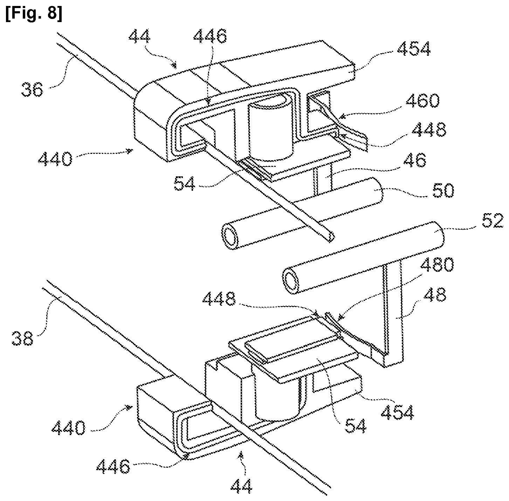

Comme visible notamment sur les figures 3 à 8, chaque contact mobile 44 présente une partie avant 440 en forme de crochet, configurée pour être, dans la position de fixation du contact mobile 44, en prise avec un rebord 32 respectif du rail de fixation 3. Le rail de fixation 3 comporte ainsi un rebord 32 au niveau d'une extrémité supérieure 30a et un rebord 32 au niveau d'une extrémité inférieure 30b. Chaque rebord 32 comporte un retour 320, de façon à délimiter une cavité 322 ouverte vers l'arrière du rail de fixation. Chaque cavité 322 accueille un conducteur électrique 36, 38 respectif, disposé au fond de la cavité correspondante. L'extrémité libre 442 de la partie avant 440 de chaque contact mobile 44 constitue l'extrémité d'un retour 444, et comporte une face de contact (avant) reliée électriquement à un conducteur interne 446 intégré au contact mobile 44. Le conducteur interne 446 est disposé de façon à relier la partie avant 440 du contact mobile 44 correspondant à une partie arrière 448 opposée à la partie avant 440. Au niveau de l'extrémité libre 450 de la partie arrière, le conducteur 426 est relié électriquement à une face de contact (arrière). La face de contact de la partie arrière (448) est, comme visible notamment sur la figure 8, reliée électriquement à l'un de deux conducteurs internes 46, 48 disposés au sein du corps 40, lorsque le contact mobile 44 est dans la position de fixation. Dans l'exemple des figures, dans lesquelles le module adaptateur 4 forme un socle de prise électrique, chaque conducteur interne 46, 48 est respectivement relié électriquement à l'une de deux bornes électriques 50, 52. Chaque conducteur interne 46, 48 comporte à cet effet une partie de contact 460, 480 formant une lamelle souple et configurée pour entrer en contact avec le conducteur de liaison 426 lorsque le contact mobile 44 correspondant est dans la position de fixation.

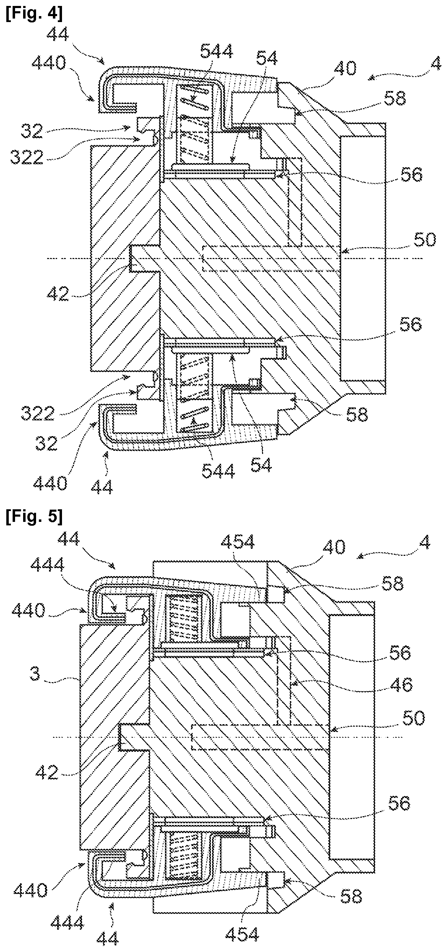

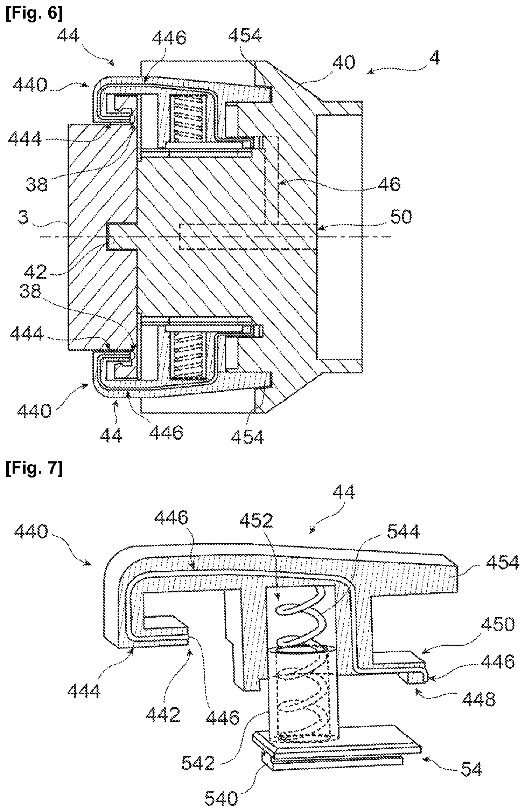

Chaque contact mobile est mobile en translation par rapport au corps 40, selon un premier axe perpendiculaire à la surface du rail de fixation 3 lorsque le module adaptateur 40 est accolé à celui-ci, entre une position avancée, visible sur les figures 3 et 4, et une position reculée, visible sur les figures 2 et 6. Pour permettre ce mouvement de translation, chaque contact mobile 44 est dans l'exemple solidaire d'une plaquette 54 respective montée à translation dans le corps 40 du module adaptateur 4, et coulissant dans une rainure interne 56 ménagée dans le corps 40, dans l'exemple une rainure en forme de T. À cet effet, chaque plaquette 54 comporte en partie inférieure une languette 540 de forme adaptée, par exemple de forme complémentaire de la rainure interne 56.

Chaque contact mobile 44 est en outre mobile en translation par rapport au corps 40 selon un deuxième axe perpendiculaire au premier axe et perpendiculaire à l'axe d'allongement du rail de fixation 30. Chaque contact mobile 44 est ainsi mobile entre une position basse, visible sur les figures 2, 5, et 6, et une position haute, visible sur les figures 3 et 4. À cet effet, chaque contact mobile est monté à translation sur la plaquette 54 correspondante. Dans l'exemple des figures, chaque plaquette 54 comporte un fût 542 coulissant dans un logement de forme complémentaire 452 ménagé dans le contact mobile 44 correspondant. Le fût 542 de chaque plaquette 54 accueille un dispositif de rappel élastique, tel qu'un ressort 544, sollicitant le contact mobile 44 correspondant vers sa position haute. La position haute et avancée des contacts mobiles 44 correspondant à la position d'engagement, tandis que la position basse et reculée des contacts mobiles 44 correspond à la position de fixation.

On décrit ci-après, en relation avec les figures 3 à 6, les étapes de fixation du module adaptateur 4 sur le rail de fixation 3.

Comme visible sur la figure 3, il est nécessaire, pour fixer un module adaptateur 4 sur le rail de fixation 3, que les contacts mobiles 44 soient dans leur position d'engagement, soit leur position haute et avancée. Dans cette position, l'écartement entre les parties avant 440 (et plus précisément entre les retours 444) des deux contacts mobiles 44 est supérieure à l'écartement entre les rebords 32 du rail de fixation 3 (et plus précisément entre les retours 320). Comme visible sur la figure 4, cette configuration permet, lors d'une première étape, d'approcher le module adaptateur 4 du rail de fixation 3 et d'insérer la languette 42 du corps 40 dans la rainure 30 du rail de fixation 3, de sorte que les parties avant 440 des deux contacts mobiles 44 se trouvent disposées de part et d'autre du rail de fixation 30, et notamment en arrière des rebords 32 et des retours 320.

Lorsque le module adaptateur 4 est correctement positionné et accolé au rail de fixation 3, on vient, lors d'une deuxième étape, presser les contacts mobiles 44 afin que ceux-ci passent de leur position haute (et avancée) à leur position basse (et avancée), comme visible sur la figure 5.

Lors d'une troisième étape, visible sur la figure 6, on déplace à nouveau les contacts mobiles 44, afin que ceux-ci passent de leur position avancée (et basse) à leur position reculée, ou position de fixation. Ce mouvement final a pour effet d'imbriquer la partie avant 440 de chaque contact mobile 44 avec le rebord 32 correspondant, permettant ainsi la fixation du module adaptateur 4 sur le rail de fixation. Dans la position de fixation, l'extrémité libre 442 de la partie avant 440 de chaque contact mobile 44 est en contact avec le conducteur 36, 38 correspondant du rail de fixation 3, ce qui a pour effet de relier électriquement chacun de ces conducteurs 36, 38 au conducteur interne 446 correspondant, comme visible sur la figure 8.

Avantageusement, chaque contact mobile 44 comporte une partie terminale 454 configurée pour être logée dans une cavité 58 de forme complémentaire ménagée dans le corps 40 lorsque le contact mobile 44 correspondant est dans sa position de fixation, comme visible sur la figure 6. Cette configuration permet d'assurer un verrouillage des contacts mobiles 44 en position de fixation, sous l'action antagoniste du ressort 544 d'une part (qui sollicite le contact mobile 44 correspondant vers sa position haute) et la cavité 58 et le rebord 320 d'autre part.

Pour retirer le module adaptateur 4 du rail de fixation 3, on effectuera les étapes inverses à celles décrites ci-dessus. Ainsi, la première étape consistera à passer les contacts mobiles de leur position de fixation à leur position basse et avancée (figure 5), sachant que dans cette position, l'action des ressorts 544 aura pour effet de faire passer automatiquement les contacts mobiles à leur position avancée et haute, position dans laquelle le module adaptateur 4 peut être retiré du rail de fixation 3.

Le système de fixation décrit ci-dessus permet d'assurer facilement et simplement la fixation et la connexion électrique d'un module adaptateur au rail de fixation. En prévoyant que les contacts électriques 36, 38 du rail de fixation 3 sont dissimulés par les rebords 32, et ainsi disposés au fond d'une cavité orientée vers l'arrière du rail, on rend ces conducteurs peu accessibles à un utilisateur. Avantageusement, les cavités 322 seront configurées pour que leurs dimension ne permettent pas à un utilisateur d'y insérer un doigt. Le système conforme à l'invention présente donc à la fois une grande souplesse et une grande facilité d'utilisation, tout en assurant un haut degré de sécurité pour les utilisateurs.

## Revendications

1. Système de fixation (2) pour la fixation dans un habitacle de véhicule (1) automobile d'un module adaptateur, le système de fixation (2) comportant :
- un rail de fixation (3), de forme allongée, destiné à être fixé à un élément d'habillage d'un véhicule (1) automobile, tel qu'une planche de bord (10), le rail de fixation (3) comportant une face avant destinée à accueillir un module adaptateur (4), le rail de fixation (3) comportant deux conducteurs (36, 38) électriques disposés respectivement le long d'une extrémité supérieure (30a) et d'une extrémité inférieure (30b) du rail de fixation (3), chaque conducteur (36, 38) étant disposé au fond d'une cavité (322) ménagée dans un rebord (32) correspondant du rail de fixation (3) et ouverte vers l'arrière du rail de fixation (3) ;
- au moins un module adaptateur (4), le module adaptateur (4) étant configuré pour être fixé au rail de fixation (3) de façon amovible, le module adaptateur (4) comportant un corps (40) et deux contacts mobiles (44), mobiles par rapport au corps (40) entre une position d'engagement, dans laquelle ils permettent d'accoler le module adaptateur (4) au rail de fixation (3), les contacts mobiles étant alors disposés de part et d'autre des rebords (32) du rail de fixation (3), et une position de fixation, dans laquelle une partie avant (440) formant un crochet de chaque contact mobile (44) est en prise avec le rebord (32) correspondant, une extrémité libre (442) de la partie avant (440) de chaque contact mobile (44) comportant une face de contact, la face de contact étant alors reliée électriquement au conducteur (36, 38) correspondant, permettant ainsi de connecter électriquement le module adaptateur (4) et le rail de fixation (3).

2. Système de fixation (2) selon la revendication précédente, dans lequel chaque contact mobile (44) est mobile en translation par rapport au corps (40) selon un premier axe et selon un deuxième axe, les premiers et deuxième axes étant perpendiculaires, de telle sorte que les contacts mobiles sont mobiles selon le premier axe entre une position avancée et une position reculée, et sont mobiles selon le deuxième axe entre une position basse et une position haute, la position haute et avancée des contacts mobiles correspondant à la position d'engagement, la position basse et reculée des contacts mobiles correspondant à la position de fixation.

3. Système de fixation (2) selon la revendication précédente, dans lequel chaque contact mobile est solidaire d'une plaquette (54) respective, chaque plaquette (54) coulissant dans une rainure (56) respective ménagée dans le corps (40) du module adaptateur (4).

4. Système de fixation (2) selon la revendications précédente, dans lequel chaque contact mobile (44) est monté à translation sur la plaquette (54) correspondante, chaque plaquette (54) comportant un fût (542) coulissant dans un logement (452) de forme complémentaire ménagé dans le contact mobile (44) correspondant, et, de préférence, le fût (542) de chaque plaquette (54) comporte un dispositif de rappel élastique, tel qu'un ressort (544), sollicitant le contact mobile (44) vers sa position haute.

5. Système de fixation (2) selon l'une des revendications précédentes, dans lequel chaque contact mobile (44) comporte une partie terminale (454), la partie terminale (454) étant, dans la position de fixation du contact mobile (44), logée dans une cavité (58) de forme complémentaire ménagée dans le corps (40) du module adaptateur (4).

6. Système de fixation (2) selon l'une des revendications précédentes, dans lequel chaque contact mobile (44) comporte un conducteur interne (446), relié électriquement à la face de contact de la partie avant (440) du contact mobile (44) d'une part, et à une face de contact d'une partie arrière (450) du contact mobile (44) d'autre part.

7. Système de fixation (2) selon la revendication précédente, dans lequel le conducteur interne (446) de chaque contact mobile (44) est relié électriquement à un conducteur interne (46, 48) respectif du corps (40) lorsque le contact mobile (44) correspondant est en position de fixation.

8. Système de fixation (2) selon la revendication précédente, dans lequel, lorsque le module adaptateur forme un socle de prise électrique, chaque conducteur interne (46, 48) du corps (40) est relié électriquement à une borne (50, 52) respective.

9. Système de fixation (2) selon l'une des revendications précédentes, dans lequel le rail de fixation (3) comporte une rainure (30) de positionnement du module adaptateur (4), le module adaptateur comportant une languette (42) de forme complémentaire de la rainure (30), la languette (42) étant insérée dans la rainure (30) lorsque le module adaptateur (4) est fixé au rail de fixation (3).

10. Véhicule (1) automobile comportant un système de fixation (2) conforme à l'une des revendications précédentes, le rail de fixation (3) étant fixé dans un élément d'habillage (10) d'habitacle du véhicule (1), tel qu'une planche de bord, un panneau de porte ou une console, les conducteurs (36, 38) du rail de fixation (3) étant raccordés à un réseau électrique de bord du véhicule (1).

## Patentansprüche

1. Befestigungssystem (2) zur Befestigung eines Adaptermoduls im Fahrgastraum eines Kraftfahrzeugs (1). Das Befestigungssystem (2) umfasst:
- eine längliche Befestigungsschiene (3) zur Befestigung an einem Verkleidungselement eines Kraftfahrzeugs (1), beispielsweise einem Armaturenbrett (10), wobei die Befestigungsschiene (3) eine Vorderseite zur Aufnahme eines Adaptermoduls (4) aufweist und zwei elektrische Leiter (36, 38) aufweist, die jeweils an einem oberen Ende (30a) und einem unteren Ende (30b) der Befestigungsschiene (3) angeordnet sind. Jeder Leiter (36, 38) befindet sich am Boden eines Hohlraums (322), der in einem entsprechenden Rand (32) der Befestigungsschiene (3) ausgebildet und zur Rückseite der Befestigungsschiene (3) hin offen ist,
- mindestens ein Adaptermodul (4), wobei das Adaptermodul (4) so konfiguriert ist, dass es abnehmbar an der Befestigungsschiene (3) befestigt werden kann. Das Adaptermodul (4) umfasst einen Körper (40) und zwei bewegliche Kontakte (44), die relativ zum Körper (40) zwischen einer Eingriffsposition, in der sie die Befestigung des Adaptermoduls (4) an der Befestigungsschiene (3) ermöglichen, wobei die beweglichen Kontakte dann beidseits der Kanten (32) der Befestigungsschiene (3) angeordnet sind, und einer Befestigungsposition beweglich sind, in der ein vorderer Teil (440), der einen Haken jedes beweglichen Kontakts (44) bildet, mit der entsprechenden Kante (32) in Eingriff steht, wobei ein freies Ende (442) des vorderen Teils (440) jedes beweglichen Kontakts (44) eine Kontaktfläche umfasst, die dann elektrisch mit dem entsprechenden Leiter (36, 38) verbunden ist, wodurch das Adaptermodul (4) und die Befestigungsschiene (3) elektrisch verbunden werden können.

2. Befestigungssystem (2) gemäß dem vorhergehenden Anspruch, wobei jeder bewegliche Kontakt (44) relativ zum Körper (40) entlang einer ersten und einer zweiten Achse translatorisch beweglich ist, wobei die erste und die zweite Achse senkrecht zueinanderstehen, sodass die beweglichen Kontakte entlang der ersten Achse zwischen einer vorgeschobenen und einer zurückgezogenen Position und entlang der zweiten Achse zwischen einer niedrigen und einer hohen Position beweglich sind. Die hohe und vorgeschobene Position der beweglichen Kontakte entspricht der Eingriffsposition, die niedrige und zurückgezogene Position der beweglichen Kontakte der Befestigungsposition.

3. Befestigungssystem (2) gemäß dem vorhergehenden Anspruch, wobei jeder bewegliche Kontakt mit einer entsprechenden Platte (54) verbunden ist, die in einer entsprechenden Nut (56) im Körper (40) des Adaptermoduls (4) gleitet.

4. Befestigungssystem (2) nach dem vorhergehenden Anspruch, wobei jeder bewegliche Kontakt (44) verschiebbar auf der zugehörigen Platte (54) gelagert ist. Jede Platte (54) weist einen Zylinder (542) auf, der in einer komplementär geformten Aufnahme (452) des jeweiligen beweglichen Kontakts (44) gleitet. Vorzugsweise weist der Zylinder (542) jeder Platte (54) eine elastische Rückstellvorrichtung, beispielsweise eine Feder (544), auf, die den beweglichen Kontakt (44) in seine obere Position drückt.

5. Befestigungssystem (2) nach einem der vorhergehenden Ansprüche, wobei jeder bewegliche Kontakt (44) einen Endabschnitt (454) aufweist. Dieser Endabschnitt (454) befindet sich in der Befestigungsposition des beweglichen Kontakts (44) in einem komplementär geformten Hohlraum (58) im Körper (40) des Adaptermoduls (4).

6. Befestigungssystem (2) nach einem der vorhergehenden Ansprüche, wobei jeder bewegliche Kontakt (44) einen Innenleiter (446) aufweist, der einerseits mit der Kontaktfläche des vorderen Teils (440) des beweglichen Kontakts (44) und andererseits mit einer Kontaktfläche des hinteren Teils (450) des beweglichen Kontakts (44) elektrisch verbunden ist.

7. Befestigungssystem (2) nach dem vorhergehenden Anspruch, wobei der Innenleiter (446) jedes beweglichen Kontakts (44) in der Befestigungsposition mit einem entsprechenden Innenleiter (46, 48) des Körpers (40) elektrisch verbunden ist.

8. Befestigungssystem (2) nach dem vorhergehenden Anspruch, wobei, wenn das Adaptermodul einen Steckdosensockel bildet, jeder Innenleiter (46, 48) des Körpers (40) mit einem entsprechenden Anschluss (50, 52) elektrisch verbunden ist.

9. Befestigungssystem (2) nach einem der vorhergehenden Ansprüche, bei dem die Befestigungsschiene (3) eine Nut (30) zur Positionierung des Adaptermoduls (4) aufweist, wobei das Adaptermodul eine Lasche (42) mit einer zur Nut (30) komplementären Form aufweist, wobei die Lasche (42) in die Nut (30) eingeführt wird, wenn das Adaptermodul (4) an der Befestigungsschiene (3) befestigt wird.

10. Kraftfahrzeug (1) mit einem Befestigungssystem (2) nach einem der vorhergehenden Ansprüche, wobei die Befestigungsschiene (3) in einem Verkleidungselement (10) des Fahrgastraums des Fahrzeugs (1), beispielsweise einem Armaturenbrett, einer Türverkleidung oder einer Konsole, befestigt ist, wobei die Leiter (36, 38) der Befestigungsschiene (3) mit einem elektrischen Bordnetz des Fahrzeugs (1) verbunden sind.

## Claims

1. Fastening system (2) for fastening an adapter module in a passenger compartment of a motor vehicle (1), the fastening system (2) comprising:
- a fastening rail (3), of elongated shape, intended to be fastened to a trim element of a motor vehicle (1), such as a dashboard (10), the fastening rail (3) comprising a front face intended to accommodate an adapter module (4), the fastening rail (3) comprising two electrical conductors (36, 38) arranged respectively along an upper end (30a) and a lower end (30b) of the fastening rail (3), each conductor (36, 38) being arranged at the bottom of a cavity (322) formed in a corresponding rim (32) of the fastening rail (3) and open towards the rear of the fastening rail (3);
- at least one adapter module (4), the adapter module (4) being configured to be removably attached to the fixing rail (3), the adapter module (4) comprising a body (40) and two movable contacts (44), movable relative to the body (40) between an engagement position, in which they allow the adapter module (4) to be attached to the fixing rail (3), the movable contacts then being arranged on either side of the edges (32) of the fixing rail (3), and a fixing position, in which a front part (440) forming a hook of each movable contact (44) is engaged with the corresponding edge (32), a free end (442) of the front part (440) of each movable contact (44) comprising a contact face, the contact face then being electrically connected to the corresponding conductor (36, 38), thus allowing the adapter module (4) and the fixing rail (3) to be electrically connected.

2. Fastening system (2) according to the preceding claim, in which each movable contact (44) is movable in translation relative to the body (40) along a first axis and along a second axis, the first and second axes being perpendicular, such that the movable contacts are movable along the first axis between an advanced position and a retracted position, and are movable along the second axis between a low position and a high position, the high and advanced position of the movable contacts corresponding to the engagement position, the low and retracted position of the movable contacts corresponding to the fixing position.

3. Fastening system (2) according to the preceding claim, in which each movable contact is integral with a respective plate (54), each plate (54) sliding in a respective groove (56) formed in the body (40) of the adapter module (4).

4. Fixing system (2) according to the preceding claim, in which each movable contact (44) is mounted in translation on the corresponding plate (54), each plate (54) comprising a barrel (542) sliding in a housing (452) of complementary shape provided in the corresponding movable contact (44), and, preferably, the barrel (542) of each plate (54) comprises an elastic return device, such as a spring (544), urging the movable contact (44) towards its high position.

5. Fixing system (2) according to one of the preceding claims, in which each movable contact (44) comprises an end portion (454), the end portion (454) being, in the fixing position of the movable contact (44), housed in a cavity (58) of complementary shape provided in the body (40) of the adapter module (4).

6. Fixing system (2) according to one of the preceding claims, wherein each movable contact (44) comprises an internal conductor (446), electrically connected to the contact face of the front part (440) of the movable contact (44) on the one hand, and to a contact face of a rear part (450) of the movable contact (44) on the other hand.

7. Fixing system (2) according to the preceding claim, wherein the internal conductor (446) of each movable contact (44) is electrically connected to a respective internal conductor (46, 48) of the body (40) when the corresponding movable contact (44) is in the fixing position.

8. Fixing system (2) according to the preceding claim, wherein, when the adapter module forms an electrical socket base, each internal conductor (46, 48) of the body (40) is electrically connected to a respective terminal (50, 52).

9. Fastening system (2) according to one of the preceding claims, in which the fastening rail (3) comprises a groove (30) for positioning the adapter module (4), the adapter module comprising a tab (42) of a shape complementary to the groove (30), the tab (42) being inserted into the groove (30) when the adapter module (4) is fixed to the fastening rail (3).

10. Motor vehicle (1) comprising a fixing system (2) according to one of the preceding claims, the fixing rail (3) being fixed in a trim element (10) of the passenger compartment of the vehicle (1), such as a dashboard, a door panel or a console, the conductors (36, 38) of the fixing rail (3) being connected to an on-board electrical network of the vehicle (1).
